Europäisches Patentamt

European Patent Office

Office européen des brevets

(19)

(11) Veröffentlichungsnummer: **0 345 271 B1**

(12) # EUROPÄISCHE PATENTSCHRIFT

(45) Veröffentlichungstag der Patentschrift: **25.11.92**

(51) Int. Cl.⁵: **B24B  45/00**, B27B 5/32, B23B 31/40

(21) Anmeldenummer: **88901239.9**

(22) Anmeldetag: **12.01.88**

(86) Internationale Anmeldenummer:
**PCT/EP88/00015**

(87) Internationale Veröffentlichungsnummer:
**WO 88/06075 (25.08.88 88/19)**

(54) **SPANNEINRICHTUNG ZUM AXIALEN FESTSPANNEN EINES WERKZEUGES, INSBESONDERE EINER SCHEIBE.**

(30) Priorität: **21.02.87 DE 3705638**

(43) Veröffentlichungstag der Anmeldung:
**13.12.89 Patentblatt  89/50**

(45) Bekanntmachung des Hinweises auf die
Patenterteilung:
**25.11.92 Patentblatt  92/48**

(84) Benannte Vertragsstaaten:
**AT CH DE FR GB IT LI NL SE**

(56) Entgegenhaltungen:
**EP-A- 0 015 327          EP-A- 0 231 500
DE-A- 1 925 017          DE-A- 2 809 569
DE-C- 946 318            FR-A- 2 101 513
US-A- 2 290 215**

(73) Patentinhaber: **ROBERT BOSCH GMBH
Postfach 30 02 20
W-7000 Stuttgart 30(DE)**

(72) Erfinder: **KIRN, Manfred
Mühlhaldenstr. 24
W-7000 Stuttgart 80(DE)**

EP 0 345 271 B1

## Beschreibung

### Stand der Technik

Die Erfindung geht aus von einer Spanneinrichtung zum axialen Festspannen eines Werkzeuges, insbesondere einer Scheibe, nach dem gattungsbildenden Oberbegriff des Hauptanspruchs. Derartige Spannvorrichtungen sind vor allem für tragbare Handwerkzeugmaschinen und hierbei insbesondere für Schleifmaschinen geeignet. Es ist eine Spanneinrichtung genannter Art bekannt (DE-PS 30 12 836), bei der die Spannscheibe aus einem im Querschnitt etwa hutförmigen Element besteht, das axial über eine Schraubenfeder gegen den Flansch der Spannmutter abgestützt ist. Beim Aufschrauben und Festziehen der Spannmutter wird über die axial zusammengedrückte Feder diese Spannscheibe axial gegen das Werkzeug angedrückt und dadurch das Werkzeug gegen den spindelseitigen Flansch festgezogen, wobei die Stirnseite eines Zylinderansatzes der Spannmutter unmittelbar an einer zugewandten Axialseite des spindelseitigen Flansches zur Anlage kommt und beim weiteren Festziehen der Spannmutter der spindelseitige Flansch zusammen mit dar Spannmutter festgezogen wird, evtl. bis der rückwärtige Flansch an der das Stützelement bildenden Schulterfläche der Spindel axial zur Anlage kommt. Dadurch soll erreicht werden, bei einem Winkelschleifer die Schleifscheibe mit definiertem Anpreßdruck einzuspannen und diesen Anpreßdruck sicherzustellen. Diese Spanneinrichtung soll auch ein rasches und einFaches Auswechseln der Schleifscheibe ermöglichen und zugleich eine Überlastung der Handwerkzeugmaschine, insbesondere des Winkelschleifers, vermeiden. Wird nämlich das an der Schleifscheibe angreifende Drehmoment zu groß, bleibt die Schleifscheibe stehen, während der rückwärtige Flansch sowie die Spannmutter mit der Spannscheibe eine Relativbewegung dazu ausführen. Mit dieser Spanneinrichtung wird dem Effekt entgegengewirkt, daß im Betrieb die Spannmutter sich von selbst weiter festzieht, was sonst das Lösen der Spannmutter beim Wechsel der Schleifscheibe erheblich erschwert. Dennoch ist hierbei ein Lösen der Spannmutter nur unter Zuhilfenahme eines besonderen Hilfswerkzeuges möglich , wobei je nach Ausbildung der Maschine die Spindel mit einem zweiten Hilfswerkzeug, z.B. Schraubenschlüssel, entsprechend gegengehalten werden muß.

In der bezüglich der vorliegenden Anmeldung (des vorliegenden Patents) nicht vorveröffentlichten EP-A-0 231 500 (Stand der Technik nach Art. 54(3) EPÜ), ist eine gattungsgemäße, mutterartige Spanneinrichtung zum schnellen Lösen der Schraubverbindung zwischen Merkzeug und Spindel beschrieben. In Spannstellung stützt sich - wie ein Kniehebel wirkend - ein Kugelpaar aneinander ab. Zum Lösen kann das Kugelpaar bzw. eine der Kugeln mittels eines Betätigungsgliedes in einen sich in Umfangsrichtung erstreckenden Ausweichraum gerollt werden. Dadurch kann der Spanndruck auf das zu spannende Werkzeug soweit verringert werden, daß die Spanneinrichtung von der Spindel gelöst werden kann. Diese Spanneinrichtung unterscheidet sich jedoch hinsichtlich der vorliegenden Erfindung deutlich, insbesondere durch Fehlen gesonderter, radial durch Rollkörper beaufschlagter Stützkörper mit entsprechenden, in Umfangsrichtung verlaufenden (Roll)-Bahnen, durch Fehlen am Betätigungsglied angeordneter Mitnehmer sowie radialer Aussparungen, in die die Rollkörper ausweichen können, um die Stützkörper vom Spanndruck zu entlasten.

Die funktionellen Unterschiede bestehen im wesentlichen darin, daß die im Inneren der erfindungsgemäßen Spanneinrichtung ablaufenden Bewegungen bestimmten Teilen fest zugeordnet sind: Die Rollkörper können rollen, aber auch gleiten, verschiebbar durch die Mitnehmer, wobei die Stützkörper gleiten und dabei die axiale, zur Spannmutter gerichtete Bewegung des Flansches 16 in radialer Richtung bremsen. Dadurch werden ruckartige Bewegungsabläufe vermieden, es kommt zu sanften, aufeinanderfolgenden Bewegungen beim Lösen des Spanndrukkes. Dies ist bei der bekannten Spanneinrichtung nicht gesichert, weil hier die Kugelpaare sowohl die Funktion der Stützkörper als auch der Rollkörper übernehmen und die axiale Verschiebung des Flansches nicht verzögert wird.

### Vorteile der Erfindung

Bei der erfindungsgemäßen Spanneinrichtung mit den Merkmalen des Hauptanspruchs ergeben sich folgende Vorteile. Es wird ein Werkzeugwechsel ohne jegliches Hilfswerkzeug ermöglicht, der sich im übrigen schnell und sicher durchführen läßt. Ein weiterer Vorteil liegt darin, daß auch bereits vorhandene Handwerkzeugmaschinen ohne besonderen Umbau umgerüstet werden können. Hierzu reicht z.B. ein einfacher Austausch der dort vorhandenen herkömmlichen Spannmutter gegen die Kompletteinheit, bestehend aus Spannmutter mit Spannscheibe und Betätigungsglied. Bei allem kann die Spannmutter nach wie vor, beispielsweise gemäß Anspruch 24, im von außen zugänglichen Bereich herkömmlich. z.B. normgerecht, ausgebildet sein, so daß immer noch für besonders hartnäckige Fälle, z.B. bei festgerosteter Spannmutter, ein Schlüssel angesetzt und die Spannmutter mit diesem Hilfswerkzeug gelöst werden kann. Das gleiche Prinzip gemäß der erfindungsgemäßen Spanneinrichtung kann auch beim rückwärtigen, spindelseitigen Flansch verwirklicht werden, wobei dieser Flansch dann gegen die Kompletteinheit, bestehend aus Spannmutter mit Spannscheibe und Betätigungsglied, ausgetauscht wird und wobei dann die Spannscheibe rückseitig gegen das Werkzeug angepreßt ist.

Durch die in den Unteransprüchen aufgeführten Merkmals sind vorteilhafte Weiterbildungen und Verbesserungen der im Hauptanspruch angegebenen Spanneinrichtung möglich. Dabei kann es ausreichend sein, wenn die Stützkörper nur auf einer Axialseite entsprechende schräge Auflageflächen aufweisen, wobei dann auf der zugewandten Axialseite der Spannmutter oder der Spannscheibe eine schräge Stützfläche mit gleichem Schrägungswinkel vorhanden ist. Auf der gegenüberliegenden Axialseite der Stützkörper kann die Auflagefläche sowie die zugeordnete Stützfläche der Spannscheibe oder Spannmutter als Radialfläche ohne Schrägung ausgebildet sein. Von Vorteil ist jedoch die Ausbildung mit beidseitig schrägen Auflageflächen der Stützkörper und jeweils zugeordneten, mit entsprechendem Schrägungswinkel versehenen Ringflächen der Spannmutter einerseits und Spannscheibe andererseits. Die Rollkörper, insbesondere Kugeln, werden zwischen den Ringflächen des Betätigungsgliedes und der Stützkörper radial gehalten und geführt. Zur Sicherung der Rollkörper, insbesondere Kugeln, in Axialrichtung reicht es aus, wenn mindestens eine dieser beiden Ringflächen mit einer dem Kugelradius angepaßten Laufrille versehen ist. Von Vorteil ist, daß abhängig vom jeweiligen Schrägungswinkel der Stützkörper nur ein Teil des axialen Spanndruckes auf die Rollkörper, insbesondere Kugeln, und damit auf das Betätigungsglied übertragen werden. Die Rollkörper, insbesondere Kugeln, sind somit nicht sehr stark beansprucht.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen, wodurch jedoch alle diese Anspruchsmerkmale als an dieser Stelle ausdrücklich und erfindungswesenlich offenbart zu gelten haben.

Zeichnung

Ein Ausführungsbeispiel der Erfindung ist in dar Zeichnung dargestellt und in der nachfolgenden Beschreibung näher erläutert. Es zeigen:

Fig. 1      einen schematischen axialen Längsschnitt einer Spanneinrichtung als Teil eines Winkelschleifers mit eingespannter Schleifscheibe, im Schnitt entlang der Linie I-I in Fig. 2,

Fig. 2 und 3      jeweils einen schematischen Schnitt entlang der Linie II-II bzw. III-III in Fig. 1,

Fig. 4      einen schematischen Schnitt entlang der Linie IV-IV in Fig. 2,

Fig. 5      eine schematische, teilweise geschnittene Draufsicht mit Teilen der Spanneinrichtung.

Beschreibung des Ausführungsbeispieles

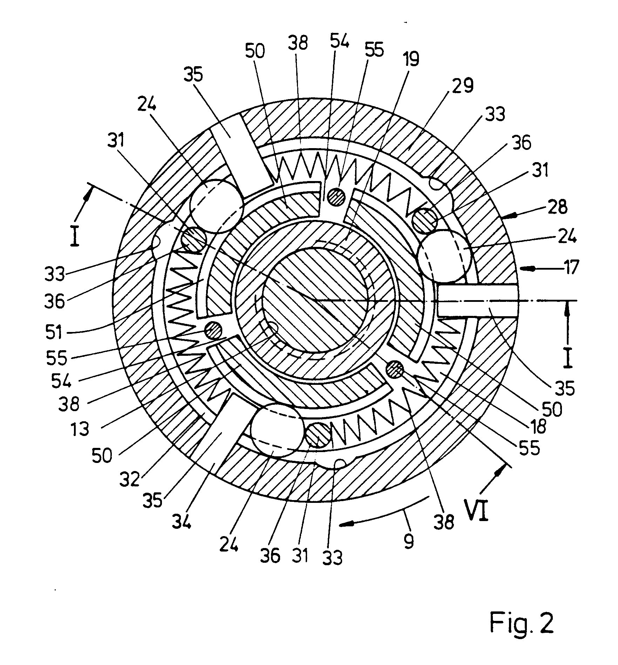

In den Zeichnungen ist der untere Teil einer z.B. als Winkelschleifer gestalteten, tragbaren Handwerkzeugmaschine gezeigt, die eine motorisch und über ein nicht gezeigtes Getriebe angetriebene Spindel 10 aufweist, die am Ende über eine Ringschulter 11 in einen zylindrischen Absatz 12 kleineren Durchmessers und sodann in einen endseitigen Gewindeabsatz 13 mit Außengewinde 14 übergeht. Die Spindel 10 dient zum Antrieb eines Werkzeuges 15, das z.B. aus der angedeuteten Schleifscheibe oder einer anderen Werkzeugscheibe, einem Gummiteller od.dgl. besteht. Das Werkzeug 15 ist zwischen einem Flansch 16 und einem Spannglied, das Teil einer Spannmutter 17 ist und später noch näher erläutert ist, eingespannt und festgespannt. Der Flansch 16 ist axial an der Ringschulter 11 abgestützt und radial auf dem zylindrischen Absatz 12 zentriert. Durch zusammenpassende Formflächen, z.B. zwei zueinander parallele Abflachungen, an der Spindel 10 und am Flansch 16 hat letzterer drehfesten Formschluß mit der Spindel 10, von der er bei eingeschaltetem Motor in Umlaufrichtung gemäß Pfeil 9 drehfest mitgenommen wird. Diese Umlaufrichtung gemäß Pfeil 9 entspricht der Arbeitsrichtung des Werkzeuges 15, in der dieses angetrieben ist. Diese entspricht in Draufsicht gemäß Fig. 2 dem Uhrzeigersinn. Die Spannmutter 17 weist einen Flansch 18 und eine davon abgehende, zylinderhülsenförmige Nabe 19 auf und ist in dieser mit einem durchgängigen Innengewinde 20 versehen, mit dem die Spannmutter 17 auf das Außengewinde 14 des Gewindeabsatzes 13 aufgeschraubt ist. Auf der äußeren Umfangsfläche den Nabe 19 ist beim Befestigen das Werkzeug 15 zentriert.

Im Axialbereich zwischen dem Werkzeug 15 und der Spannmutter 17 ist eine Spannscheibe 21 angeordnet, die einen gegen das Werkzeug 15 drückenden Spannteller 22 aufweist. Die Spannscheibe 21 ist von der Spannmutter 17 her mit einer axial gerichteten Druckkratt beaufschlagbar und in der Lage,axial gegen das Werkzeug 15 zu drücken und dieses gegen die axiale Stirnseite des Flansches 16 fest anzupressen.

Die Spannscheibe 21 ist mit der Spannmutter 17 axial verschiebbar jedoch undrehbar gekoppelt.

Axial zwischen der Spannscheibe 21 und dem Flansch 18 der Spannmutter 17 sind Stützkörper 50 angeordnet. Den Stützkörpern 50 ist auf der zugewandten Seite des Flansches 18 der Spannmutter 17 eine Stützfläche in Form einer Ringfläche 26 zugeordnet. Der gegenüberliegenden Axialseite der Stützkörper 50 ist ebenfalls eine Stützfläche zugeordnet, die aus einer Ringfläche 25 auf der zugewandten Seite des Spelltellers 22 der Spannscheibe 21 besteht.

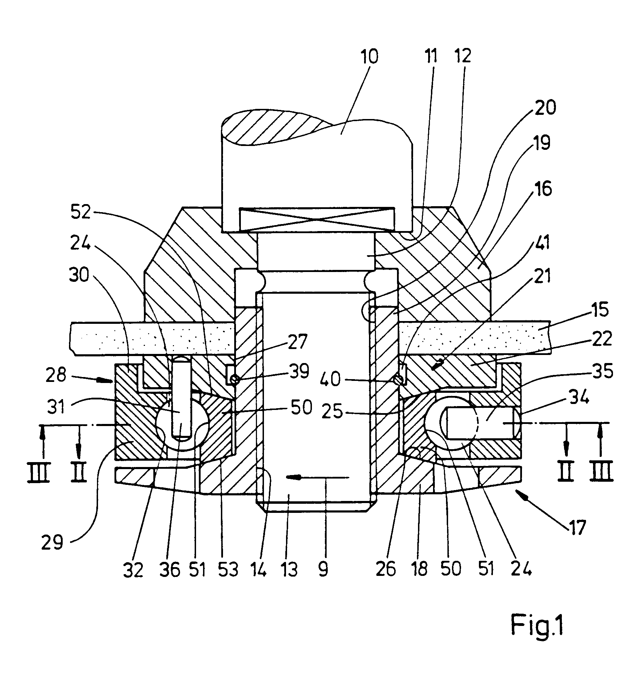

Zwischen der Spannscheibe 21 und der Spannmutter 17 ist ein Betätigungsglied 28 in Form eines Ringes 29 angeordnet, der mit einem in Fig. 1 oberen Ringkragen 30 den Spannteller 22 in Axialrichtung übergreift unter Belassung von Bewegungsspiel dazwischen. Der Ringkragen 30 endet axial in Abstand und gemäß Fig. 1 unterhalb der am Werkzeug 15 anliegenden Stirnfläche des Spelltellers 22. Der Ring 29 sitzt axial mit Bewegungsspiel zwischen der Spannscheibe 21 und der Spannmutter 17 und ist relativ zu beiden drehbar gehalten. Im Inneren enthält der Ring 29 eine im Querschnitt etwa rinnenförmige Ringfläche 32, die bei einem anderen, nicht gezeigten Ausführungsbeispiel auch zylindrisch sein kann. Auf gleicher axialer Höhe weisen die Stützkörper 50 auf ihrer radial äußeren Umfangsfläche eine entsprechende, rillenförmig vertiefte Ringfläche 51 auf. Die Stützkörper 50 sind mittels auf den Ringflächen 32 und 51 geführter und abrollender Rollkörper 24, die hier aus Kugeln bestehen, radial beaufschlagt. Beim gezeigten Ausführungsbeispiel sind drei in etwa gleichen Umfangswinkelabständen voneinander angeordnete Kugeln 24 vorhanden, die auf den zur Mittelachse konzentrischen Ringflächen 32 und 51 geführt sind und dabei in Berührung mit den Stützkörpern 50 einerseits und dem Betätigungsglied 28 andererseits stehen. Das Betätigungsglied 28 arbeitet auf die Kugeln 24, die von jenem in der der Festspannrichtung entsprechenden Richtung gegensinnig zum Pfeil 9 gegen Anschläge 31 der Spannscheibe 21 gedrückt werden. Dieser Spannzustand ist in Fig. 1 bis 5 gezeigt.

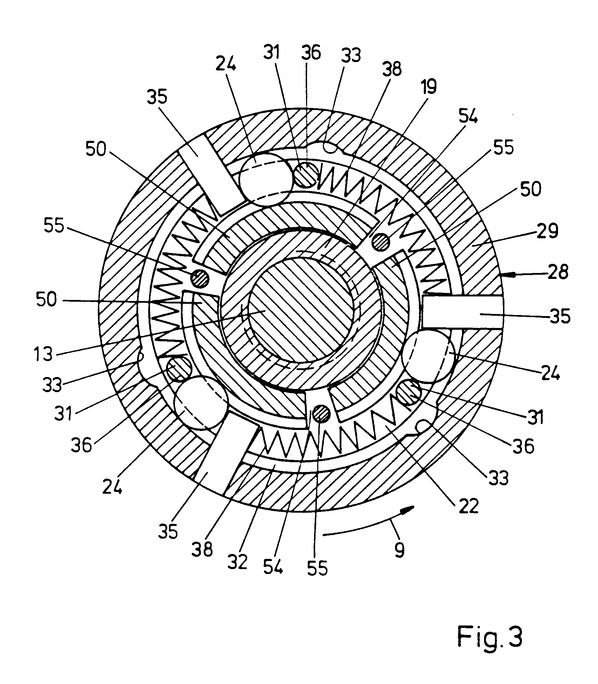

Wie aus Fig. 2 und 3 ersichtlich ist, ist im Bereich der Ringfläche 32 des Betätigungsgliedes 28 für jede Kugel 24 eine dieser zugeordnete Aussparung 33 enthalten, die jeweils aus einer Vertiefung in der Ringfläche 32 besteht und insbesondere als in radialer Richtung nach außen hin eingetieftе Kugeltasche ausgebildet ist, die in Richtung zum Zentrum offen ist. Jede Aussparung 33 ist dabei so beschaffen, daß beim Abrollen der Kugeln 24 und bei Erreichen der jeweils zugeordneten Aussparung 33 die Kugeln 24 in Radialrichtung nach außen auswandern können, wodurch sich eine radiale Entlastung der Stützkörper 50 ergibt, so daß die Stützkörper 50 sich radial von innen nach außen zumindest geringfügig versetzen können. Dabei reicht es, daß zumindest eine der beiden Ringflächen 25, 26, zwischen denen die Stützkörper 15 axial angeordnet sind, kegelstumpfförmig und dabei mit derart ausgerichteter Kegelspitze ausgebildet sind, daß die Stützkörper 50 bei dieser radialen Entlastung und Radialverschiebung auf dieser schrägen Ringfläche 25 und/oder 26 eine Axialbewegung der Spannscheibe 21 in Richtung zur Spannmutter 17 zulassen, zumindest mit geringfügiger Verringerung des Axialabstandes, so daß die Spannscheibe 21 vom Spanndruck entlastet wird.

Beim gezeigten Ausführungsbeispiel ist sowohl die abstützende Ringfläche 25 der Spannscheibe 21 als auch die abstützende Ringfläche 26 der Spannmutter 17 kegelstumpfförmig und in beschriebener Weise ausgebildet, so daß beide Ringflächen 25, 26 zusammen eine Keilnut bilden. Die Stützkörper 50 weisen scwohl auf der Axialseite, die der Ringfläche 25 zugewandt ist, als auch auf der gegenüberliegenden Axialseite dem Verlauf der jeweiligen Ringfläche 25 bzw. 26 entsprechende Auflageflächen 52 bzw. 53 auf. Beim gezeigten Ausführungsbeispiel hat jeder Stützkörper 50 etwa Keilquerschnitt, wobei der Keilwinkel demjenigen der Keilnut, gebildet durch die Ringflächen 25, 26, zumindest im wesentlichen entspricht. Wie aus Fig. 2 und 3 ersichtlich ist, sind die einzelnen Stützkörper 50 jeweils als Kreisringsegmente gebildet. Beim gezeigten Ausführungsbeispiel sind drei solcher kreisringsegmentförmiger Stützkörper 50 vorgesehen, die in etwa gleichen Umfangswinkelabständen voneinander angeordnet sind. Dabei sind zwischen den aneinander angrenzenden Stützkörpern 50 jeweils Lücken 54 belassen, in die etwa achsparallele Positionierglieder 55 in Form von Stiften hineinragen. Diese Stifte 55 befinden sich außerhalb des Rollbereiches der Kugeln 24, so daß sie deren Abrollbewegung zwischen den Ringflächen 32 und 51 nicht behindern. Die Stifte 55 sind beim gezeigten Ausführungsbeispiel an der Spannscheibe 21 befestigt und stehen über deren stützende Ringfläche 25 über. Bei einem anderen, nicht gezeigten Ausführungsbeispiel sind die Stifte 55 statt dessen an der Spannmutter 17 angebracht. Die Stifte 55 positionieren die Stützkörper 50 in Umfangsrichtung in ihrer Lage und gewährleisten, daß sich die Stützkörper 50 in Umfangsrichtung nicht versetzen.

Das Betätigungsglied 28 ist je Kugel 24 mit einem festen Mitnehmer 34 in Form eines am Ring 29 fest angebrachten Radialstiftes 35 versehen, der radial von außen nach innen in die Bahn der jeweils vorgelagerten Kugel 24 zumindest so weit hineinragt, daß dabei z.B. eine etwa tangentiale Anlage an der jeweils vorgelagerten Kugel 24 erfolgt.

Die Anschläge 31 der Spannscheibe 21 sind aus etwa achsparallelen Längsstiften 36 gebildet, die etwa achsparallel durch die von den Ringflächen 32 und 51 zusammen gebildete Führungsrille für die Kugeln 24 hindurchgreifen und dabei so, daß noch ausreichender Zwischenraum zwischen der Innenfläche des Ringes 29 und den Längsstiften 36 besteht, so daß diese bei der Relativdrehung zwischen dem Betätigungsglied 28 einerseits und der Spannmutter 17 mit Spannscheibe 21 andererseits nicht am Betätigungsglied 28 schleifen. Die Längsstifte 36 befinden sich jeweils auf der dem Radialstift 35 je Kugel 24 gegenüberliegenden, anderen Seite der jeweils zugeordneten Kugel 24. In der in Fig. 1 - 5 gezeigten Spannstellung bei festgespanntem Werkzeug 15 und eingeschaltetem Motor wird über die Klemmkraft und Reibung mit dem Werkzeug 15 auch die Spannscheibe 21 in Arbeitsrichtung gemäß Pfeil 9 mitgenommen. Da die Spannscheibe 21 zwar axial relativ verschieblich jedoch in Umfangsrichtung drehfest mit der Spannmutter 17 gekoppelt ist, wird dadurch gleichermaßen auch die Spannmutter 17 mitgenommen. Die Längsstifte 36 schlagen dabei in Pfeilrichtung 9 an den jeweils vorgelagerten Kugeln 24 an, die dabei gegen die jeweils vorgelagerten Radialstifte 35 des Betätigungsgliedes 28 drücken. Das Betätigungsglied 28 ist gegensinnig zur Umlaufrichtung gemäß Pfeil 9, die zugleich der Löserichtung entspricht, federbelastet. Dies ist durch jeweilige zylindrische Schraubenfedern 38 erreicht, die innerhalb der von den Ringflächen 32 und 51 gebildeten Führungsrille für die Kugeln 24 plaziert und in Umfangsrichtung wirksam sind. Jede Schraubenfeder 38 ist dabei im Umfangsbereich zwischen einem Längsstift 36 und einem Radialstift 35 angeordnet und endseitig an diesen abgestützt. Mittels dieser Schraubenfedern 38 ist das Betätigungsglied 28 relativ zur Spannmutter 17 und Spannscheibe 21 in der zum Pfeil 9 gegensinnigen Richtung derart federelastisch beaufschlagt, daß der jeweilige Radialstift 35 die jeweils vorgelagerte Kugel 24 in Richtung gegensinnig zum Pfeil 9 gegen den vorgelagerten Längsstift 36 drückt. Über die Schraubenfedern 38 ist das Betätigungsglied 28 mithin in der in Fig. 1 - 5 gezeigten Spannstellung, relativ zur Spannmutter 17 mit Spannscheibe 21, gehalten.

Die Spannscheibe 21 ist an der Spannmutter 17 axial so gesichert, daß eine zumindest geringfügige Axialbewegung zwischen beiden möglich ist. Die Spannscheibe 21 weist eine durchgängige Innenfläche 27 im Bereich des Spanntellers 22 auf, die grundsätzlich zylindrisch sein kann und von der Nabe 19 der Spannmutter 17 durchsetzt ist, auf der der Spannteller 22 zentriert und zumindest in Grenzen axial beweglich gehalten und geführt ist. Zur Sicherung kann ein in Fig. 1 nur schematisch angedeuteter Federring 39 dienen, der in einer Nut 40 auf der äußeren Umfangsfläche der Nabe 19 der Spannmutter 17 im wesentlichen paßgenau aufgenommen ist, und zwar so, daß der Federring 39 in die Nut 40 etwa mit seinem halben Querschnitt eintaucht, während die andere Hälfte seines Querschnitts radial übersteht. Die Spannscheibe 21 enthält auf der Innenfläche 27 eine dem Federring 39 zugeordnete Nut 41, die jedoch eine größere Axialbreite als der Federring 39 und die Nut 40 aufweist. Die radial gemessene Tiefe der Nut 41 entspricht etwa der anderen Hälfte des Querschnitts des Federringes 39. Nicht besonders gezeigt ist, daß die Flanken der Nut 40 und/oder 41 angeschrägt sein können, wodurch ein leichtes Zusammenschieben und späteres Lösen der Spannscheibe 21 und Spannmutter 17 in Axialrichtung möglich ist. Bei der vorstehend beschriebenen Ausbildung mit zylindrischer Innenfläche 27 und zylindrischer Außenfläche der Nabe 19 erfolgt die drenmomentübertragende Kopplung zwischen der Spannscheibe 21 und der Spannmutter 17 z.B. über die Längsstifte 36, die axial bis hin zum Flansch 18 der Spannmutter 17 verlängert sind und in dortige Bohrungen mit axialem Schiebespiel eingreifen.

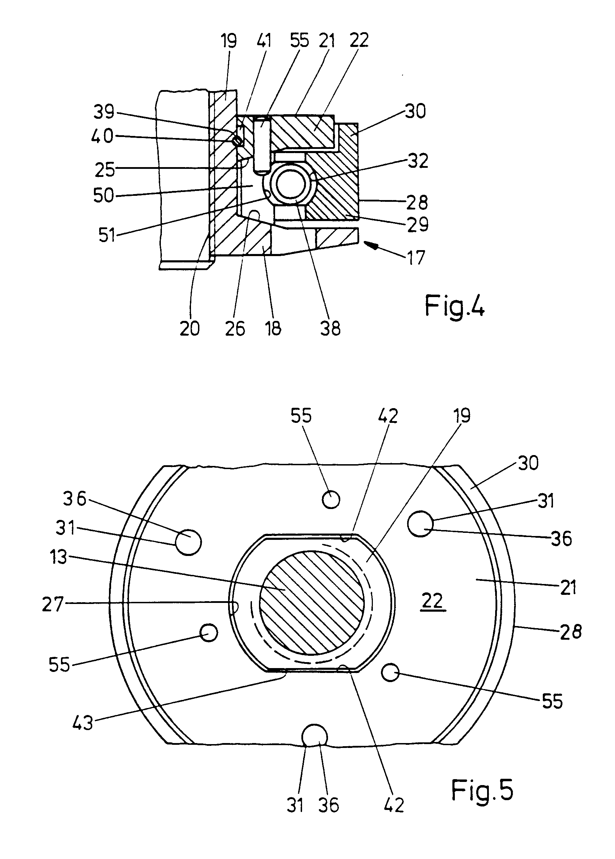

Beim gezeigten Ausführungsbeispiel erfolgt die drehfeste Kopplung statt dessen durch äußere Formflächen. Wie Fig.5 zeigt, ist die Innenfläche 27 des Spanntellers 22 der Spannscheibe 21 abweichend von der Zylinderfom mit zwei diametral gegenüberliegenden Flachflächen 42 versehen. In entsprechender Zuordnung weist die Nabe 19 der Spannmutter 17 auf gleichem Axialbereich entsprechende äußere Flachflächen 43 auf, so daß über die Flachflächen 42 und 43 eine formschlüssige Kupplung in Umfangsrichtung erfolgt, die jedoch zumindest in Grenzen eine axiale Relativverschieblichkeit ermöglicht. Statt eines Federringes 39 ist dann eine z.B. etwa haarnadelförmige Federspange vorgesehen, deren beide Schenkel die Schnittdarstellung in Fig. 1 und 4 erkennen läßt, für die das zuvor beschriebene gilt.

In den Zwischenräumen zwischen dem Ring 29 und der Spannscheibe 21 auf dessen einer Axialseite sowie dem Flansch 18 der Spannmutter 17 auf dessen anderer Axialseite können nicht weiter gezeigte Dichtelemente, z.B. Schaumgummiringe, angeordnet sein, die eine Abdichtung gegen ein Eindringen von Schmutz, z.B. Staub. od.dgl. gewährleisten. Die Dichtelemente werden bei der Montage eingelegt.

Fig. 1 - 4 zeigt die beschriebene Spanneinrichtung in ihrer Spannstellung, in der über die Spannscheibe 21, axial abgestützt an der Spannmutter 17 über die Stützkörper 50, das Werkzeug 15 axial am Flansch 16 festgespannt ist.

Soll das Werkzeug 15 entfernt und gewechselt werden, so wird über geeignete Mittel der Flansch 16 und/oder das Werkzeug 15 drehblockiert. was z.B. durch entsprechende Blockierung der Spindel 10 z.B mittels einer in der Handwerkzeugmaschine integrierten Spindelarretiereinrichtung erfolgen kann. Unter Umständen reicht evtl. auch die Reibung im Getriebe bis hin zum Motor aus. die Spindel 10 zumindest in Grenzen an einer Drehung in Pfeilrichtung 9 zu hindern. Zum Lösen wird dann das Betätigungsglied 28 in Arbeitsrichtung gemäß Pfeil 9 von Hand gedreht, wobei die Radialstifte 35 von den Kugeln 24 abheben und unter Zusammendrücken der Schraubenfedern 38 in Umfangsrichtung in Richtung auf die Längsstifte 36 der relativ dazu nicht drehenden Spannscheibe 21 mit Spannmutter 17 bewegt werden. Bei dieser Bewegung wälzen sich die Kugeln 24 auf den durch die Ringflächen 32 und 51 gebildeten Bahnen ab, wobei die Kugeln 24 ebenfalls in Umrangsrichtung gemäß Pfeil 9 wandern. Sobald die Kugeln 24 bei dieser Bewegung die Aussparungen 33 in der Ringfläche 32 des Betätigungsgliedes 28 erreicht haben, tauchen die Kugeln 24 radial in diese Aussparungen 33 ein. Dadurch werden die Stützkörper 50 von der auf sie in Radialrichtung von außen nach innen wirkenden Stützkraft zumindest in Grenzen entlastet. Die Stützkörper 50 können sich daher mit ihren schrägen Auflageflächen 52, 53 auf den entsprechend schrägen Ringflächen 25 bzw. 26 radial nach außen verschieben. Aufgrund der Schrägflächen kann dabei die Spannscheibe 21 axial dem Spanndruck ausweichen, d.h. bei der Betrachtung in Fig. 1 sich axial zumindest geringfügig in Richtung auf die Spannmutter 17 und den Ring 29 verlagern. zumindest so weit, daß eine entsprechende axiale Entspannung erzielt wird. Daraufhin kann die Kompletteinheit, bestehend aus Spannmutter 17 mit Spannscheibe 21 und Betätigungsglied 28, vollends leicht von Hand abgeschraubt werden. Die relative Schwenkbewegung des Betätigungsgliedes 28 zum axialen Entspannen der Spannscheibe 21 wird dadurch begrenzt, daß die Radialstifte 35 dann, wenn die Schraubenfedern 38 ganz zusammengedrückt sein sollten, an den Längsstiften 36 anschlagen. Sobald die axiale Entspannung erfolgt ist und die Kompletteinheit vollends leicht von Hand abgeschraubt werden kann, erfolgt die Rückstellung der Kugeln 24 selbsttätig aufgrund der sich entspannenden Schraubenfedern 38. Durch den Federdruck auf die Radialstifte 35 wird das Betätigungsglied 28 relativ zur Spannmutter 17 mit Spannscheibe 21 wieder in die in Fig. 2 und 3 gezeigte Ausgangsstellung zurückgedreht, wobei durch die Abrollbewegung der Kugeln 24 diese wieder aus den Aussparungen 33 herausbewegt und in die gezeigte Position zurückbewegt werden. Beim Bewegen der Kugeln 24 aus den Aussparungen 33 heraus und so, daß die Kugeln wieder auf der Ringfläche 32 des Betätigungsgliedes 28 abgestützt sind, wird über die Kugeln 24 eine radial von außen nach innen gerichtete Kraft auf die Stützkörper 50 ausgeübt, die jene wieder in die in Fig. 1 - 4 gezeigte Ausgangsstellung zurückdrängt, in der die Spannscheibe 21 wieder die Ausgangsstellung gemäß Fig. 1 einnimmt. In dieser Position ist die Kompletteinheit, bestehend aus Spannmutter 17 mit Spannscheibe 21 und Betätigungsglied 28, bereit zum Festspannen eines neuen, eingesetzten Werkzeuges. Hierzu reicht es aus, diese Kompletteinheit beim Aufschrauben auf den Gewindeabsatz 13 gegensinnig zum Pfeil 9 leicht anzuziehen, und damit das neue Werkzeug 15 leicht festzuziehen, da beim nachfolgenden Einschalten des Motors sich das Werkzeug 15 im Betrieb selbst festzieht.

Das gleiche Prinzip der erfindungsgemäßen Spanneinrichtung kann auch beim rückwärtigen, spindelseitigen Flansch 16 verwirklicht werden, wobei dieser Flansch dann durch die Kompletteinheit, bestehend aus Spannmutter mit Spannscheibe und Betätigungsglied, ausgetauscht wird, und wobei dann die Spannscheibe rückseitig gegen das Werkzeug angepreßt ist.

Die beschriebene Spanneinrichtung ist einfach, kostengünstig und schnell, sicher und leicht zu handneben. Sie ermöglicht einen schnellen und sicheren Wechsel des Werkzeuges 15, ohne daß man hierzu zusätzliche, besondere Werkzeuge benötigt. Ein weiterer Vorteil liegt darin, daß auch vorhandene Handwerkzeugmaschinen, insbesondene Schleifmaschinen, nachträglich ohne sonstigen Umbau mit dieser Spanneinrichtung ausgerüstet werden können. Hierzu muß lediglich deren herkömmliche Spannmutter ersetzt werden durch das Kompletteil bestehend aus Spannmutter 17 mit Spannscheibe 21 und Betätigungsglied 28. Im übrigen kann die Spannmutter 17 so ausgebildet werden, daß diese nach wie vor erforderlichenfalls auch einen Angriff eines besonderen Werkzeuges, z.B. in Form eines Zweilochmutterdrehers, ermöglicht, so daß darüber die Spannmutter 17 und mithin das gesamte Kompletteil in besonders hartnäckigen Fällen, z.B. im angerosteten Zustand, auch noch in üblicher Weise mittels eines solchen Hilfswerkzeuges gelöst werden kann. Die Spanneinrichtung ist nicht auf eine Schleifscheibe als Werkzeug 15 beschränkt. Vielmehr können in gleicher Weise werkzeuglos auch sonstige Werkzeuge, z.B. Spannscheiben, Bürsten, Gummiteller, Sägeblätter einer Kreissäge od.dgl. gespannt werden.

**Patentansprüche**

1. Spanneinrichtung zum axialen Festspannen eines Werkzeuges (15), insbesondere einer Scheibe, an einem Flansch (16) einer angetriebenen Spindel (10) mit einer auf einem Gewindeabsatz (13) der Spindel (10) aufschraubbaren Spannmutter (17) und einer axial zwischen dem Werkzeug (15) und der Spannmutter (17) angeordneten und an der Spannmutter (17) abgestützten Spannscheibe (21), die gegen das Werkzeug (15) drücken und dieses gegen den Flansch (16) anpressen kann, dadurch gekennzeichnet, daß die Spannscheibe (21) mit der Spannmutter (17) axial verschiebbar, jedoch undrehbar gekoppelt ist und mittels zwischen axialen Stützflächen (25, 26) der Spannscheibe (21) und Spannmutter (17) gehaltener axialer Stützkörper (50) axial abgestützt ist, daß zwischen der Spannscheibe (21) und der Spannmutter (17) ein Betätigungsglied (28) angeordnet ist, daß die Stützkörper (50) mittels auf in Umfangsrichtung verlaufender Bahnen (51, 32) der Stützkörper (50) und des Betätigungsgliedes (28) geführter und abrollender Rollkörper (24) radial beaufschlagt sind und daß das Betätigungsglied (28) mittels mindestens eines Mitnehmers (34), die Rollkörper (24) in der der Festspannrichtung entsprechenden einen Richtung gegen Anschläge (31) der Spannscheibe (21) drücken und gegensinnig dazu längs der Bahnen (51, 32) bis in darin einmündende, jeweils zugeordnete radiale Aussparungen (33) unter radialer Entlastung der Stützkörper (50) und axialer Entlastung der Spannscheibe (21) vom Spanndruck bewegen kann.

2. Spanneinrichtung nach Anspruch 1, **dadurch gekennzeichnet,** daß die Stützkörper (50) jeweils als Kreisringsegmente ausgebildet sind.

3. Spanneinrichtung nach Anspruch 1 oder 2, **dadurch gekennzeichnet,** daß zumindest eine der an der Spannscheibe (21) bzw. der Spannmutter (17) vorgesehenen Stützflächen (25, 26) bezogen auf die Längsmittelachse zumindest schwach kegelstumpfförmig und dabei mit derart ausgerichteter Kegelspitze ausgebildet ist, daß die Stützkörper (50) bei radialer Entlastung und Radialverschiebung auf dieser mindestens einen Stützfläche (25, 26) eine Axialbewegung der Spannscheibe (21) in Richtung zur Spannmutter (17) zulassen.

4. Spanneinrichtung nach einem der Ansprüche 1 - 3 , **dadurch gekennzeichnet,** daß die Stützfläche (25) an der Spannscheibe (21) und die Stützfläche (26) an der Spannmutter (17) jeweils kegelstumpfförmig ausgebildet sind und zusammen eine Keilnut bilden.

5. Spanneinrichtung nach einem der Ansprüche 1 - 4, **dadurch gekennzeichnet,** daß die Stützkörper (50) auf beiden Axialseiten den Stützflächen (25, 26) der Spannscheibe (21) und der Spannmutter (17) hinsichtlich ihres Verlaufs entsprechende Auflageflächen (52, 53) aufweisen.

6. Spanneinrichtung nach den Ansprüchen 4 und 5, **dadurch gekennzeichnet,** daß die Stützkörper (50) jeweils etwa Keilquerschnitt aufweisen, wobei der Keilwinkel demjenigen der Keilnut zumindest im wesentlichen entspricht.

7. Spanneinrichtung nach einem der Ansprüche 1 - 6, **gekennzeichnet durch** drei in etwa gleichen Umfangswinkelabständen voneinander angeordnete, kreisringsegmentförmige Stützkörper (50).

8. Spanneinrichtung nach einem der Ansprüche 1 - 7, **dadurch gekennzeichnet,** daß die Spannscheibe (21) und/oder die Spannmutter (17) außerhalb des Bahnbereichs der Rollkörper (24) etwa achsparallel abstehende Positionierglieder (55), insbesondere Stifte, aufweisen, die über die zugeordnete Stützfläche (25 26) überstehen und die Stützkörper (50) in Umfangsrichtung in ihrer Lage positionieren.

9. Spanneinrichtung nach einem der Ansprüche 1 - 8, **dadurch gekennzeichnet,** daß die Spannscheibe (21) mit ihrer Innenfläche (27) auf einer Nabe (19) der Spannmutter (17) zentriert und in Grenzen axial beweglich gehalten und geführt ist.

10. Spanneinrichtung nach Anspruch 9, **gekennzeichnet durch** einen Federring (39) oder eine etwa haarnadelförmige Federspange in einer Nut des einen Teils, der bzw. die in eine Nut des anderen Teils formschlüssig eingreift, wobei eine dieser beiden Nuten (40, 41) eine größere Axialbreite als der Querschnitt des Federringes (39) bzw. der Schenkel der Federspange aufweist.

11. Spanneinrichtung nach Anspruch 10, **dadurch gekennzeichnet,** daß die den Federring (39) oder Schenkel der Federspange etwa paßgenau aufnehmende eine Nut (40) auf der Außenfläche der Nabe (19) und die andere Nut (41) größerer Axialbreite auf der Innenfläche (27) der Spannscheibe (21) angeordnet ist.

12. Spanneinrichtung nach einem der Ansprüche 1 - 11, **dadurch gekennzeichnet,** daß die Spannscheibe (21) und die Spannmutter (17) mittels einander entsprechender äußerer Formflächen, insbesondere Flachflächen (42, 43), in Umfangsrichtung formschlüssig, jedoch axial relativ verschieblich gekuppelt sind.

**13.** Spanneinrichtung nach einem der Ansprüche 1 - 12, **gekennzeichnet durch** drei in etwa gleichen Umfangswinkelabständen voneinander angeordnete Rollkörper (24).

**14.** Spanneinrichtung nach einem der Ansprüche 1 - 13, **dadurch gekennzeichnet,** daß die Rollkörper (24) als Kugeln ausgebildet sind.

**15.** Spanneinrichtung nach einem der Ansprüche 1 - 14, **dadurch gekennzeichnet,** daß das Betätigungsglied (28) aus einem Ring (29) besteht, der axial zwischen der Spannscheibe (21) und der Spannmutter (17) angeordnet und relativ dazu drehbar gehalten ist,und daß der Ring (29) eine zylindrische oder rillenförmig vertiefte innere, den Rollkörpern (24), insbesondere Kugeln, zugeordnete Bahn (32) aufweist.

**16.** Spanneinrichtung nach einem der Ansprüche 1 - 15, **dadurch gekennzeichnet,** daß die Stützkörper (50) auf ihrer äußeren Umfangsfläche eine zylindrische oder rillenförmig vertiefte, den Rollkörpern (24), insbesondere Kugeln, zugeordnete Bahn (51) aufweisen.

**17.** Spanneinrichtung nach einem der Ansprüche 1 - 16, **dadurch gekennzeichnet,** daß die Aussparungen (33) im Bereich der Bahn, insbesondere Ringfläche (32), des Betätigungsgliedes (28) vorgesehen sind.

**18.** Spanneinrichtung nach Anspruch 17, **dadurch gekennzeichnet,** daß die Aussparungen (33) als Vertiefungen, insbesondere als in radialer Richtung nach außen hin eingetiefte und radial nach Innen hin offene Kugeltaschen, ausgebildet sind, in die die Kugeln (24) bei Rollbetätigung infolge Drehung des Betätigungsgliedes (28) in Löserichtung (Pfeil 9) unter Radialversatz ausweichen können.

**19.** Spanneinrichtung nach einem der Ansprüche 1 - 18, **dadurch gekennzeichnet,** daß das Betätigungsglied (28) gegensinnig zur Löserichtung (Pfeil 9) federbelastet ist.

**20.** Spanneinrichtung nach einem der Ansprüche 1 - 19, **dadurch gekennzeichnet,** daß das Betätigungsglied (28) je Rollkörper (24), insbesondere Kugel, einen festen Mitnehmer (34) aufweist, der in die Bahn des Rollkörpers (24) ragt und am Rollkörper (24) in dar einen Richtung anschlägt.

**21.** Spanneinrichtung nach einem der Ansprüche 1 - 20, **dadurch gekennzeichnet,** daß die Spannscheibe (21) und/oder die Spannmutter (17) je Rollkörper (24), isnbesondere Kugel, einen die Bahn quer durchsetzenden Anschlag (31) aufweist, an dem der jeweilige Rollkörper (24) in der einen Richtung anschlägt.

**22.** Spanneinrichtung nach Anspruch 20 und 21, **dadurch gekennzeichnet,** daß der jeweilige Mitnehmer (34) aus einem Radialstift (35) und der jeweilige Anschlag (31) aus einem etwa achsparallelen Längsstift (36) gebildet ist.

**23.** Spanneinrichtung nach einem der Ansprüche 19 - 22, **dadurch gekennzeichnet,** daß in der der Festspannrichtung entsprechenden einen Umfangsrichtung betrachtet im Umfangsbereich zwischen jeweils einem Anschlag (31), insbesondere Längsstift (36), einerseits und einem Mitnehmer (34), insbesondere Radialstift (35), andererseits eine an beiden abgestützte und in Umfangsrichtung wirksame Feder (38) angeordnet ist, mittels der das Betätigungsglied (28) relativ zur Spannmutter (17) mit Spannscheibe (21) in dieser Richtung derart beaufschlagt ist, daß dessen jeweiliger Mitnehmer (34), insbesondere Radialstift (35), den jeweils vorgelagerten Rollkörper (24), insbesondere die Kugel, gegen den diesem vorgelagerten Anschlag (31), insbesondere Längsstift (36),drückt.

**24.** Spanneinrichtung nach einem der vorhergehenden Ansprüche, dadurch gekennzeichnet, daß sie äußere Angriffsflächen, insbesondere als Teil von Bohrungen ausgestaltet, besitzt, in die ein Spannschlüssel eingreifen kann, um die Spannmutter (17) bei besonderer Schwergängigkeit, beispielsweise bei angerostetem Gewindeabsatz (13), zu lösen.

**Claims**

**1.** Clamp device for axially clamping fast a tool (15), particularly a disc, on a flange (16) of a driven spindle (10), comprising a clamp nut (17) adapted to be screwed onto a threaded neck (13) of the spindle (10) and a clamp disc (21) which is disposed axially between the tool (15) and the clamp nut (17), is supported against the clamp nut (17) and is adapted to press against the tool (15) and to press the latter against the flange (16), characterised in that the clamp disc (21) is coupled to the clamp nut (17) to be axially movable but non-rotatable and is axially supported by means of axial supporting members (50) held between axial supporting surfaces (25, 26) of the clamp disc (21) and clamp nut (17), in that an operating member (28) is disposed between the clamp disc (21) and the clamp nut (17), in that the supporting members (50) are radially stressed by means of rolling members (24) which are guided and roll on tracks (51, 32) of the supporting members (50) and of the operating member (28), which tracks run in the circumferential direction, and in that the operating member (28) can, by means of at least one driver (34), press the rolling members (24) in the one direction, corresponding to the clamping fast direction, against stops (31) of the clamp disc (21) and move them in the opposite direction along the tracks (51, 32) until in respectively associated radial recesses (33) leading into said tracks, thereby relieving the supporting members (50) radially, and the clamp disc (21) axially, of the clamp pressure.

2. Clamp device according to Claim 1, characterised in that the supporting members (50) are constructed in each case as circular annular segments.

3. Clamp device according to Claim 1 or 2, characterised in that at least one of the supporting surfaces (25, 26) provided on the clamp disc (21) and the clamp nut (17) is at least slightly frustoconical in shape with respect to the longitudinal centre axis and at the same time is constructed with the cone apex aligned in such a manner that, on radial relief and radial displacement on this at least one supporting surface (25, 26), the supporting members (50) allow an axial movement of the clamp disc (21) in the direction of the clamp nut (17).

4. Clamp device according to one of Claims 1 to 3, characterised in that the supporting surface (25) on the clamp disc (21) and the supporting surface (26) on the clamp nut (17) are in each case constructed frustoconically in shape and together form a keyway.

5. Clamp device according to one of Claims 1 to 4, characterised in that the supporting members (50) are provided on both axial sides with support surfaces (52, 53) which correspond with regard to their shape to the supporting surfaces (25, 26) of the clamp disc (21) and the clamp nut (17).

6. Clamp device according to Claims 4 and 5, characterised in that the supporting members (50) have in each case an approximately wedge-shaped cross-section, the wedge angle corresponding at least substantially to that of the keyway.

7. Clamp device according to one of Claims 1 to 6, characterised by three circular annular segment-shaped supporting members (50) disposed approximately equal peripheral angular distances apart.

8. Clamp device according to one of Claims 1 to 7, characterised in that the clamp disc (21) and/or the clamp nut (17) has or have positioning members (55), especially pins, which extend approximately axially parallel outside the track range of the rolling members (24) and which project beyond the associated supporting surface (25, 26) and position the supporting members (50) in the peripheral direction.

9. Clamp device according to one of Claims 1 to 8, characterised in that the clamp disc (21) is centred with its inner surface (27) on a hub (19) of the clamp nut (17) and is held and guided to be axially movable within limits.

10. Clamp device according to Claim 9, characterised by a spring ring (39) or an approximately hairpin-shaped spring clasp in a groove in one part, said spring ring or clasp engaging positively in a groove in the other part, one of these two grooves (40, 41) having a greater axial width than the cross-section of the spring ring (39) or the legs of the spring clasp.

11. Clamp device according to Claim 10, characterised in that the one groove (40) receiving approximately with an accurate fit the spring ring (39) or legs of the spring clasp is disposed in the outer surface of the hub (19), and the other groove (41) having a greater axial width is disposed in the inner surface (27) of the clamp disc (21).

12. Clamp device according to one of Claims 1 to 11, characterised in that the clamp disc (21) and the clamp nut (17) are coupled positively in the peripheral direction but with axial relative movability by means of mutually corresponding external shaped surfaces, particularly flat surfaces (42, 43).

13. Clamp device according to one of Claims 1 to 12, characterised by three rolling members (24) disposed approximately equal peripheral angular distances apart.

14. Clamp device according to one of Claims 1 to 13, characterised in that the rolling members (24) are in the form of balls.

**15.** Clamp device according to one of Claims 1 to 14, characterised in that the operating member (28) is composed of a ring (29), which is disposed axially between the clamp disc (21) and the clamp nut (17) and is held rotatably relative thereto, and in that the ring (29) has an inner track (32) which is cylindrical or sunk in groove form and is assigned to the rolling members (24), particularly balls.

**16.** Clamp device according to one of Claims 1 to 15, characterised in that the supporting members (50) have on their outer peripheral surface a track (51) which is cylindrical or sunk in groove form and is assigned to the rolling members (24), particularly balls.

**17.** Clamp device according to one of Claims 1 to 16, characterised in that the recesses (33) are provided in the region of the track, particularly annular surface (32), of the operating member (28).

**18.** Clamp device according to Claim 17, characterised in that the recesses (33) are constructed as depressions, particularly as ball pockets which are sunk outwards in the radial direction and open radially inwards, into which recesses the balls (24) can escape by radial displacement when they are caused to roll by the turning of the operating member (28) in the release direction (arrow 9).

**19.** Clamp device according to one of Claims 1 to 18, characterised in that the operating member (28) is spring-loaded oppositely to the release direction (arrow 9).

**20.** Clamp device according to one of Claims 1 to 19, characterised in that the operating member (28) has for each rolling member (24), particularly ball, a fixed driver (34), which projects into the track of the rolling member (24) and strikes against the rolling member (24) in one direction.

**21.** Clamp device according to one of Claims 1 to 20, characterised in that the clamp disc (21) and/or the clamp nut (17) is provided for each rolling member (24), particularly ball, with a stop (31) extending transversely through the track, against which stop the respective rolling member (24) strikes in the one direction.

**22.** Clamp device according to Claims 20 and 21, characterised in that the respective driver (34) is formed by a radial pin (35) and the respective stop (31) is formed by an approximately axially parallel longitudinal pin (36).

**23.** Clamp device according to one of Claims 19 to 22, characterised in that, viewed in the one peripheral direction corresponding to the clamping direction, there is disposed in the peripheral region between each stop (31), particularly longitudinal pin (36), on the one hand and a driver (34), particularly radial pin (35), on the other hand a spring (38) which is supported against said stop and said driver and acts in the peripheral direction, and by means of which the operating member (28) is loaded in that direction, relative to the clamp nut (17) and clamp disc (21), in such a manner that its respective driver (34), particularly radial pin (35), presses the respective rolling member (24), particularly the ball, lying in front of it against the stop (31), particularly longitudinal pin (36), lying in front of the latter.

**24.** Clamp device according to one of the preceding claims, characterised in that it has outer engaging surfaces, in particular designed as part of bores, into which a spanner can engage, in order to release the clamp nut (17) in the case of particular tightness, for example in the case of rusted-on threaded neck (13).

**Revendications**

**1.** Dispositif de serrage à serrage axial d'un outil (15), notamment d'un disque contre une bride (16) d'une broche (10) dont l'embout fileté (13) reçoit un écrou de serrage (17), une rondelle de serrage s'appuyant axialement entre l'outil (15) et l'écrou de serrage (17) en prenant appui contre l'écrou (17), cette rondelle poussant contre l'outil (15) et pressant celui-ci contre la bride (16), dispositif caractérisé en ce que la rondelle de serrage (21) est couplée solidairement en rotation mais coulissante axialement à l'écrou de serrage (17) et s'appuie axialement par des organes d'appui (50) maintenus axialement entre les surfaces d'appui axiales (25, 26) de la rondelle de serrage (21) et de l'écrou de serrage (17), un organe de manoeuvre (28) étant prévu entre la rondelle de serrage (21) et l'écrou de serrage (17), les organes d'appui (50) étant sollicités radialement par des organes de roulement (24) guidés et roulant sur des chemins de guidage périphériques (51, 32), des organes d'appui (50) et de l'organe de manoeuvre (28) et cet organe de manoeuvre (28) pousse par au moins un organe d'entraînement (34), les organes de roulement (24) dans une direction correspondant à la direction de serrage, contre des butées (31) de la rondelle de serrage (21) et en sens opposé le long de chemins (51, 32) jusque dans des cavités (33), radiales respectives débouchant dans ces chemins, et permettant la décharge radiale des organes d'appui (50) et la décharge axiale de la rondelle de serrage (21) par rapport à la pression de serrage.

2. Dispositif de serrage selon la revendication 1, caractérisé en ce que les organes d'appui (50) sont réalisés chaque fois sous forme de segment d'anneau de cercle.

3. Dispositif de serrage selon les revendications 1 et 2, caractérisé en ce qu'au moins l'une des surfaces d'appui (25, 26) prévue sur la rondelle de serrage (21) ou l'écrou de serrage (17) est au moins légèrement tronconique par rapport à l'axe longitudinal et présente une pointe de cône alignée de manière que lors de la décharge radiale et du coulissement radial, les organes d'appui (50) autorisent sur au moins une surface d'appui (25, 26), un mouvement axial de la rondelle de serrage (21) en direction de l'écrou de serrage (17).

4. Dispositif de serrage selon l'une des revendications 1 à 3, caractérisé en ce que la surface d'appui (25) de la rondelle de serrage (21) et la surface d'appui (26) de l'écrou de serrage (17) sont chaque fois en forme de tronc de cône et constituent ensemble une rainure trapézoïdale.

5. Dispositif de serrage selon l'une des revendications 1 à 4, caractérisé en ce que les organes d'appui (50) présentent sur les deux faces axiales des surfaces d'appui (25, 26) de la rondelle de serrage (21) et de l'écrou de serrage (17), des surfaces d'appui (52, 53) correspondantes pour leur tracé.

6. Dispositif de serrage selon les revendications 4 et 5, caractérisé en ce que les organes d'appui (51) ont sensiblement une section en forme de coin et l'angle du cône correspond au moins pratiquement à l'angle de la rainure trapézoïdale.

7. Dispositif de serrage selon l'une des revendication 1 à 6, caractérisé par trois organes d'appui (50) en forme de segment d'anneau de cercle, disposés de manière sensiblement équidistante.

8. Dispositif de serrage selon l'une des revendications 1 à 7, caractérisé en ce que la rondelle de serrage (21) et/ou l'écrou de serrage (17) ont à l'extérieur de la zone de la trajectoire des organes de roulement (24), des organes de positionnement (55) en saillie sensiblement parallèlement à l'axe, notamment des tiges qui dépassent de la surface d'appui associée (25, 26) et positionnent les organes d'appui (50) dans la direction périphérique.

9. Dispositif de serrage selon l'une des revendications 1 à 8, caractérisé en ce que la rondelle de serrage (21) est centrée par sa surface intérieure (27) sur un moyeu (19) de l'écrou de serrage (17) et est maintenue et guidée de manière mobile axialement, dans certaines limites.

10. Dispositif de serrage selon la revendication 9, caractérisé par un anneau élastique (39) ou une pince élastique en forme sensiblement d'épingle à cheveux logée dans une rainure d'une pièce et qui vient prendre par une liaison de forme dans une rainure de l'autre pièce, l'une de ces deux rainures (40, 41) et dans une largeur axiale plus grande que la section de la bague élastique (39) ou les branches de la pince élastique.

11. Dispositif de serrage selon la revendication 10, caractérisé en ce que la rainure (40) qui reçoit la bague élastique (39) ou les branches de la pince à ressort avec ajustement, est prévue sur la surface extérieure du moyeu (19) et l'autre rainure (41) de plus grande largeur axiale est prévue sur la surface intérieure (27) de la rondelle de serrage (21).

12. Dispositif de serrage selon l'une des revendications 1 à 11, caractérisé en ce que la rondelle de serrage (21) et l'écrou de serrage (17) sont couplés par l'intermédiaire de surfaces de forme extérieure correspondante, notamment de surfaces planes (42, 43) par une liaison de forme dans la direction périphérique tout en permettant un coulissement axial relatif.

13. Dispositif de serrage selon l'une des revendications 1 à 12, caractérisé par trois organes de roulement (24), prévus sensiblement de manière équiangulaire.

14. Dispositif de serrage selon l'une des revendications 1 à 13, caractérisé en ce que les organes de roulement (24) sont des billes.

15. Dispositif de serrage selon l'une des revendications 1 à 14, caractérisé en ce que l'organe de manoeuvre (28) se compose d'une bague (29) placée axialement entre la rondelle de serrage (21) et l'écrou de serrage (17) et maintenue à rotation par rapport à ces pièces, la bague (29) ayant un chemin (32) cylindrique ou en forme de rainure, en creux intérieur pour les organes de roulement (24), notamment les billes.

16. Dispositif de serrage selon l'une des revendications 1 à 15, caractérisé en ce que les organes d'appui (50) ont sur leurs surfaces périphériques extérieures, un chemin (51) cylindrique ou en creux, en forme de rainure, associé aux organe de roulement (24), notamment aux billes.

17. Dispositif de serrage selon l'une des revendications 1 à 16, caractérisé en ce que les cavités (33) sont prévues au niveau de la trajectoire, notamment de la surface annulaire (32) de l'organe de manoeuvre (28).

18. Dispositif de serrage selon la revendication 17, caractérisé en ce que les cavités (33) sont des cavités notamment dirigées radialement, à partir de l'extérieur et ouvertes radialement vers l'intérieur pour former des poches recevant les billes, dans lesquelles les billes (24) peuvent s'échapper en se déplaçant axialement, lorsque ces billes sont actionnées par rotation de l'organe de manoeuvre (28) dans la direction de desserrage (flèche 9).

19. Dispositif de serrage selon l'une des revendications 1 à 18, caractérisé en ce que l'organe de manoeuvre (28) est chargé par ressort dans le sens opposé à la direction de desserrage (flèche 9).

20. Dispositif de serrage selon l'une des revendications 1 à 19, caractérisé en ce que l'organe de manoeuvre (28) comporte chaque fois un organe de roulement (24), notamment une bille, un organe d'entraînement fixe (34) qui pénètre dans la trajectoire de l'organe de roulement (24) et bute contre l'organe de roulement (24) pour l'un de ces sens de rotation.

21. Dispositif de serrage selon l'une des revendications 1 à 20, caractérisé en ce que la rondelle de serrage (21) et/ou l'écrou de serrage (17) comporte chaque fois un organe de roulement (24) notamment une bille, une butée (31) coupant transversalement la trajectoire et contre laquelle bute l'organe de roulement (24) respectif dans l'une des direction.

22. Dispositif de serrage selon les revendications 20 et 21, caractérisé en ce que l'organe d'entraînement (34) respectif se compose d'une tige radiale (35) et d'une butée (31) respective formée d'une tige longitudinale (36) sensiblement parallèle à l'axe.

23. Dispositif de serrage selon l'une des revendications 19 à 22, caractérisé en ce que vu dans la direction périphérique correspondant au dispositif de serrage, entre chaque fois une butée (31) notamment une tige longitudinale (36) d'une part et un organe d'entraînement (34) notamment une tige radiale (35) d'autre part, on a un ressort (38) s'appuyant par ses deux extrémités et agissant dans la direction périphérique, ce ressort sollicitant l'organe de manoeuvre (28) par rapport à l'écrou de serrage (17) avec la rondelle de serrage (21) dans une direction telle que l'organe d'entraînement (34) respectif, notamment la tige radiale (35) pousse l'organe de roulement (24) chaque fois en amont notamment la bille contre la butée intermédiaire (31) notamment la tige longitudinale (36).

24. Dispositif de serrage selon l'une des revendications précédentes, caractérisé en ce quelle est munie de surfaces d'attaque extérieures, notamment comme faisant partie de perçages, dans lesquels peut prendre une clé de serrage pour desserrer l'écrou de serrage (17) dans des conditions particulièrement difficiles par exemple lorsque l'embout fileté est bloqué par la rouille.

Fig.1

EP 0 345 271 B1

Fig. 2

Fig. 3

EP 0 345 271 B1

Fig.4

Fig.5